# EUROPÄISCHE PATENTANMELDUNG

(11) **EP 3 981 301 A1**
(43) Veröffentlichungstag der Anmeldung: **13.04.2022**
(21) Anmeldenummer: 21200075.6
(22) Anmeldetag: 30.09.2021
(51) Int. Cl.: A47J 37/07

(54) **GRILLSTATION**

(30) Priorität: 01.10.2020 DE 102020125745
(71) Anmelder: Warrisch, Felix, 97944 Boxberg (DE); Nuber, Andreas, 88069 Tettnang (DE)
(72) Erfinder: Warrisch, Felix, 97944 Boxberg (DE); Nuber, Andreas, 88069 Tettnang (DE)
(74) Vertreter: Riebling, Peter

(57) **Zusammenfassung**

Grillstation (1) für die Zubereitung von Speisen bestehend aus einer Arbeitsstation (44), welche in einem Gehäuse (3) der Grillstation (1) angeordnet ist, wobei die Arbeitsstation (44) mindestens eine Heizvorrichtung (5) aufweist, welche mindestens eine Grillplatte (6) erhitzt, wobei die Arbeitsstation (44) als Schublade (4) ausgebildet ist, in welche die Heizvorrichtung (5) und die Grillplatte (6) integriert ist, wobei mindestens während des Grillvorganges die Arbeitsstation (44) aus dem Gehäuse (3) der Grillstation (1) in eine Arbeitsstellung herausziehbar ist, wobei im Gehäuse (3) der Grillstation (1) eine Reinigungskammer (9) mit einer Reinigungsanlage (43) vorhanden ist, welche mindestens die Grillplatte (6) reinigt.

## Beschreibung

Die Erfindung betrifft eine Grillstation nach den Oberbegriffen der Patentansprüche 1, 2 und 9.

Grillen wird in der Freizeit immer beliebter. Vor allem in Privatgärten, in Vereinsheimen, auf Balkonen oder auf öffentlichen Plätzen, wie z.B. Parks oder Grünanlagen treffen sich Familien, Freunde oder Bekannte um gemeinsam zu grillen. Oft stellt hierfür die Gemeinde, die Stadt oder ein Betreiber einer Ferienanlage eigene Grillplätze zur Verfügung.

Bei solchen Grillplätzen werden häufig entweder offene Feuerstellen, Einweggrills oder tragebare Holzkohlegrills verwendet. Das Verbrennen von Holzkohle ist jedoch mit einem hohen Verletzungsrisiko verbunden, da es durch den Funkenflug und die heiße Asche zu starken Verbrennungen am menschlichen Körper und zu Bränden in der Umgebung der Grillplätze kommen kann. Darüber hinaus weisen die tragbaren Grills, wie z.B. Koffergrill, Kugelgrill, Dreibeingrill oder Campinggrill meistens keinen sicheren Stand auf und können leicht kippen. Des Weiteren werden die öffentlichen Grillplätze meistens von dem Vorbenutzer schmutzig hinterlassen. Die Betreiber der öffentlichen Grillplätze klagen daher, dass der Unterhalt solchen Grillplätzen bzw. Grillstationen mit hohen Kosten verbunden ist, da fast täglich Mitarbeiter zu den einzelnen Grillplätzen fahren müssen, um diese hinsichtlich der Sauberkeit und der Betriebssicherheit zu überprüfen.

Um sichere und saubere Grillstationen im öffentlichen Raum bereitzustellen sind bereits aus dem Stand der Technik verschiedene Lösungen bekannt.

Mit der DE 10 2017 112 060 A1 des gleichen Anmelders wird beispielsweise eine Grillstation offenbart, bei welcher Grillplatten mit einer Heizvorrichtung erhitzt werden. Die Grillstation weist hierfür zwei Hubvorrichtungen und eine horizontale Führungsvorrichtung auf, mit welchen eine saubere Grillplatte für den Grillvorgang über die Heizvorrichtung zugeführt wird. Nach dem Abschluss des Grillvorganges wird die schmutzige Grillplatte von der Heizvorrichtung abgeführt und eine neue, saubere Grillplatte der Heizvorrichtung zugeführt. Es findet somit ein Wechsel der Grillplatten über der Heizvorrichtung statt.

Die Druckschrift WO 2011/128103 A2 offenbart eine Grillstation mit einem Selbstreinigungssystem. Hierbei handelt es sich um eine Grillstation für Hähnchen, welche an einem Dreharm angeordnet sind und sich während des Grillvorganges an einer Heizquelle vorbeidrehen. Der Dreharm weist eine hohle Achse mit düsenartigen Ausgängen auf, in welche während des Reinigungsvorganges eine Reinigungsflüssigkeit eingespritzt wird. Durch die Drehbewegung wird die Reinigungsflüssigkeit in dem gesamten Gehäuse verteilt und damit das Gehäuse gereinigt. Mit der vorliegenden Grillstation wird zwar ein Selbstreinigungssystem beschrieben, jedoch ist es nicht möglich eine Wurst oder ein Stück Fleisch zu grillen, da keine Kontaktfläche vorhanden ist, sondern stets das Grillgut mit dem Dreharm an einer vertikalen Wärmequelle vorbei gedreht werden muss.

Aufgabe der vorliegenden Erfindung ist nun, eine Grillstation für den öffentlichen Raum bereitzustellen, welche einfach und gefahrlos zu bedienen ist und stets eine saubere Grillfläche bereitstellt.

Wesentliches Merkmal der Erfindung ist, dass die Grillstation eine Arbeitsstation aufweist, welche als Schublade ausgebildet ist, in welche die Heizvorrichtung und die Grillplatte integriert ist, wobei mindestens während des Grillvorganges die Arbeitsstation aus dem Gehäuse der Grillstation in eine Arbeitsstellung herausziehbar ist.

Das Gehäuse der erfindungsgemäßen Grillstation ist geschlossen ausgebildet. Dadurch ist es möglich die Grillstation im öffentlichen Raum aufzustellen. Der Benutzer findet somit ein geschlossenes Gehäuse vor, aus welchem eine Arbeitsstation herausziehbar bzw. herausklappbar ist.

Bevorzugt wird die Grillstation von einem Benutzer für einen bestimmten Zeitraum gebucht. Nach dem erfolgten Bezahlvorgang wird die Arbeitsstation freigegeben und die Schublade kann mit der integrierten Heizvorrichtung aus dem Gehäuse der Grillstation für den Grillvorgang herausgezogen werden. Wenn der Grillvorgang beendet ist, wird die schubladenartige Arbeitsstation zurück in das Gehäuse geschoben.

Unter einer Schublade bzw. einem Schubladenelement wird ein Behältnis verstanden, das horizontal aus dem Gehäuse der Grillstation herausziehbar ist. Die Schublade ist auf seitlichen Schienenführungen gelagert. Bevorzugt werden für die seitlichen Führung der Schublade Teleskopschienen eingesetzt, welche das Öffnen und Schließen der Schubladen aufgrund der reduzierten Reibung einfacher machen. Darüber hinaus ist es möglich, dass die Schublade einen Selbsteinzug ("Soft-Close") aufweist, welcher bewirkt, dass sich die Schublade kurz vor dem vollkommenen Einfahren in das Gehäuse alleine zuzieht.

Die Arbeitsstation kann entweder manuell oder ferngesteuert entriegelt bzw. freigegeben werden. Unter einem manuellen Entriegelungsvorgang wird der Einsatz eines Schlüssels, einer Lochkarte, einer Magnetkarten, einer Chipkarte, einer Wertmünze oder die Eingabe eines Zahlencodes verstanden.

Unter einer ferngesteuerten Entriegelung wird eine softwarebasierte Lösung verstanden. Dies kann ein PC, ein Smartphone, oder dergleichen sein, mit welchen ein Aktuator in der Grillstation angesteuert wird, welcher die Schublade freigibt, so dass ein Benutzer die Arbeitsstation aus dem Gehäuse herausziehen kann. Nach einem erfolgten Auszug der Arbeitsstation aus dem Gehäuse steht nun die Heizvorrichtung mit der Grillplatte für den Grillvorgang zur Verfügung.

Bevorzugt weist die Schublade der Arbeitsstation einen Kontakt auf, welcher feststellt, ob die Schublade komplett aus dem Gehäuse herausgezogen ist. Erst bei einer vollkommen ausgezogenen Schublade ist es dann möglich die Heizvorrichtung einzuschalten. Dadurch soll vermieden werden, dass bei einer nicht ganz ausgezogenen Schublade die Heizvorrichtung den Innenraum des Gehäuses der Grillstation erwärmt und dadurch Schäden an der Grillstation entstehen.

Des Weiteren kann die Schubladenführung eine Arretierung aufweisen, welche die Schublade im geöffneten Zustand leicht arretiert, um ein ungewolltes Zurückschieben der Schublade während des Grillvorganges zu vermeiden.

Die Erfindung ist jedoch nicht auf die Ausbildung der Arbeitsstation als Schublade beschränkt. Bei einer weiteren bevorzugten Ausführungsform ist die Arbeitsstation aus dem Gehäuse der Grillstation klappbar bzw. an dem Gehäuse schwenkbar angeordnet. Der Schwenkvorgang der Arbeitsstation erfolgt entweder in horizontaler oder vertikaler Richtung.

Bei der vorliegenden Ausführungsform ist die Arbeitsstation als Klappe ausgebildet, welche die Heizvorrichtung mit der Grillplatte aufweist und für den Grillvorgang aus dem Gehäuse herausgeklappt wird. Bevorzugt wird die Arbeitsstation ausgehend von einer vertikalen Position in eine horizontale Position geschwenkt, so dass während des Grillvorgangs eine tischartige Grillvorrichtung mit der Grillplatte vorhanden ist. Nach dem Grillvorgang wird die Arbeitsstation dann wieder zurück in das Gehäuse der Grillstation geschwenkt, wodurch eine in sich geschlossenes Gehäuse vorhanden ist.

Unter einer Heizvorrichtung wird eine strahlende Wärmequelle verstanden, mit welcher die Grillplatte erwärmt wird. Als Hitzequelle dient ein fossiler Brennstoff, Gas, durch Gas erhitzte Steine oder eine elektrische Heizvorrichtung (z.B. Induktion). Als Beispiel für eine elektrische Heizvorrichtung kann dies eine induktive Heizvorrichtung (Induktion) sein. Mit Hilfe der Heizvorrichtung kann die Grillplatte beispielsweise auf Temperarturen von bis zu 300 Grad erwärmt werden.

Bevorzugt wird eine elektrische Heizvorrichtung eingesetzt, da dadurch sauber und ohne Rauchentwicklung die Grillplatte erhitzt wird und diese Art von Heizvorrichtung sehr umweltfreundlich ist. Die elektrische Heizvorrichtung ist beispielsweise als Rohrheizkörper ausgebildet, bei welchem durch beabstandete Rohre ein Strom fließt, wobei der Strom in Wärme umgewandelt wird und diese Wärme an die darüberliegende Grillplatte abgegeben wird.

Bei einer weiteren bevorzugten Ausführungsform ist die Heizvorrichtung als Kontaktgrill ausgebildet, welcher durch die Wärmeleitung die Grillplatte erwärmt.

Unter dem Begriff Grillplatte wird die Oberfläche verstanden, welche im Kontakt mit der Speise ist. Die Grillplatte ist bevorzugt gerade ausgebildet. Ebenso kann die Grillplatte im Randbereich einen umlaufenden, erhöhten Rand aufweisen, so dass eine schalenartige Form vorliegt. Es ist jedoch auch möglich, dass die Grillplatte einen Rand aufweist, welcher sich teilweise über die darunterliegende Heizvorrichtung erstreckt und eine Ablaufrinne aufweist.

Die Grillplatte ist bevorzugt als Platte mit einer ebenen Oberfläche ausgebildet und dadurch leicht zu reinigen. Es ist jedoch auch möglich, dass die Grillplatte auf der Oberseite Riffelungen aufweist oder als Grillrost ausgebildet ist.

Bevorzugt ist die Grillplatte einteilig ausgebildet. Hierauf ist die Erfindung jedoch nicht beschränkt. Es ist vielmehr möglich, dass mehrere Grillplatten auf der Heizvorrichtung angeordnet sind.

Bei der Heizvorrichtung und der Grillplatte handelt es sich um zwei separate Bauteile, welche in die Arbeitsstation integriert sind. Die Heizvorrichtung und die Grillplatte sind mit einer lösbaren Verbindung miteinander verbunden, so dass die Grillplatte ausgetauscht werden kann. Bevorzugt ist die lösbare Verbindung so angeordnet, dass der Benutzer der Grillstation diese nicht lösen kann. Es ist jedoch auch möglich, dass die Heizvorrichtung und die Grillplatte eine Einheit ausbilden.

Die Heizvorrichtung ist regelbar ausgebildet. Dies bedeutet, dass die Heizvorrichtung nicht nur ein- und ausgeschaltet werden kann, sondern auch bestimmte Temperaturen geregelt werden können. Die Regelung erfolgt entweder über Bedienelemente an der Grillstation, an der Arbeitsstation oder über eine Anwendungssoftware (kurz APP).

Bevorzugt können drei verschiedene Temperaturen über drei Bedienelemente angewählt werden. Die Bedienelemente sind hierbei als Taster ausgebildet, welche von dem Betreiber mit bestimmten Temperaturen belegt werden. Diese Temperaturstufen lassen sich jedoch jederzeit von dem Betreiber ändern. Des Weiteren ist es möglich, dass über die Bedienelemente eine stufenlose Regelung der Temperatur erfolgt.

Die vorliegende Erfindung ist nicht auf drei Bedienelemente für drei unterschiedliche Temperaturstufen beschränkt. Es ist vielmehr auch möglich, dass beispielsweise nur ein Bedienelement oder mehr als drei Bedienelemente dem Benutzer zur Verfügung stehen.

Bei einer weiteren bevorzugten Ausführungsform kann der Benutzer über eine APP die einzelnen Bedienelemente mit bestimmten Temperaturen belegen und somit eine zusätzliche Feinjustierung der Temperatur vornehmen. So kann beispielsweise der Benutzer das 1.Bedienelement mit einer Temperatur von 55 Grad, das 2.Bedienelement mit einer Temperatur von 150 Grad und das 3. Bedienelement mit einer Temperatur von 300 Grad belegen.

Die Heizvorrichtung kann mehrere Heizbereiche aufweisen. Jeder Heizbereich kann separat angesteuert werden. Bei einer bevorzugten Ausführungsform weist die Heizvorrichtung zwei Heizbereiche auf, deren Temperaturstufen über jeweils drei Bedienelemente gesteuert werden.

Die Arbeitsstation weist einen Griff auf, mit welchem die gesamte Arbeitsstation entweder aus dem Gehäuse gezogen oder herausgeklappt werden kann. Der Griff ist isoliert ausgebildet, so dass keine Hitze ausgehend von der Heizvorrichtung auf den Griff übertragen wird. Eine solche Isolation kann beispielsweise mit einem thermischen Trennmaterial oder mehreren Luftspalten erreicht werden. Ziel des thermisch isolierten Griffs ist, dass dieser sich nicht aufgrund der hohen Temperatur der Heizvorrichtung erhitzt und somit nicht mehr von dem Benutzer verwendet werden kann, um beispielsweise nach einem Grillvorgang die Arbeitsstation zurück in das Gehäuse der Grillstation zurückzuschieben oder zuklappen.

Bei einer weiteren bevorzugten Ausführungsform weist das Gehäuse eine Öffnung auf, in welcher die Arbeitsstation ein- und ausziehbar ist. Die Öffnung ist hierbei so ausgebildet, dass die Arbeitsstation nur knapp innerhalb der Öffnung ein und ausfährt, so dass keine Gegenstände auf der Grillplatte liegen bleiben können und in das Gehäuse fallen. Die knappe Öffnung dient somit als Abstreifer, so dass später keine liegenbleibenden Grillrückstände in das Gehäuse mit eingefahren werden und größere Schäden anrichten.

Bei einer weiteren bevorzugten Ausführungsform weist die Grillstation eine Steuerung auf, welche den Buchungsvorgang für die Grillstation steuert. Die Steuerung befindet sich entweder in der Grillstation, auf einem Server oder in einer Cloud. So ist beispielsweise die Grillstation über eine Anwendungssoftware (APP) steuerbar, welche die Arbeitsstation der Grillstation für den Grillvorgang freigibt.

Der Buchungsvorgang für die Grillstation erfolgt bevorzugt über eine APP, welche der Benutzer auf sein mobiles Endgerät aus dem Internet laden kann. Folgenden Vorgänge (beispielhaft) werden mit der APP dargestellt und lassen sich mit der APP steuern:
**a)** Ort der Grillstation Es werden alle Grillstation in der Umgebung des Benutzers angezeigt
**b)** Verfügbarkeit der Grillstation Es werden alle verfügbaren Grillstationen innerhalb eines bestimmten Zeitraumes angezeigt.
**c)** Reservierung der Grillstation
**d)** Bezahlvorgang für die Benutzung der Grillstation
Die Bezahlung erfolgt entweder über Abbuchung, ein digitales Bezahlen (Kreditkarte, PayPal etc.) oder der Benutzer kauft einen NFC-Karte, welche ein oder mehrere Guthaben für ein oder mehrere Grillvorgänge aufweist und direkt an der Grillstation eingelöst werden kann.

Nachdem der Bezahlvorgang abgeschlossen ist, wird die Arbeitsstation der Grillstation freigeschalten und entriegelt. Der Benutzer kann nun die Arbeitsstation aus dem Gehäuse der Grillstation herausziehen oder herausklappen.

Die Freischaltung erfolgt bevorzugt nur für einen gewissen Zeitraum. Dieser Zeitraum wird von der Steuerung überwacht. Wenn die Arbeitsstation nicht innerhalb dieses Zeitraums manuell betätigt wird, so wird diese wieder von der Steuerung verriegelt. Dies soll verhindern, dass eine Fremdbenutzung erfolgt, wenn der eigentliche Benutzer, welcher die Grillstation gebucht hatte, nicht erscheint.

Unter einer manuellen Betätigung wird ein Berühren des Griffs oder das Betätigen eines Tasters verstanden, mit welchem der Grillvorgang bestätigt bzw. gestartet wird.

Die Steuerung der Grillstation überwacht ferner die Zustände der Arbeitsstation. Die Heizvorrichtung in der Arbeitsstation kann zwar nur bei vollkommen ausgezogener Schublade eingeschaltet werden, jedoch schaltet sich die Heizvorrichtung nach dem Ablauf der Buchungszeit automatisch aus. Der Benutzer muss dann die Arbeitsstation zurück in das Gehäuse schieben, um den Grillvorgang endgültig abzuschließen. Als Aufforderung zur Beendigung des Grillvorganges und/oder zum Schließen der Schublade erhält der Benutzer beispielsweise ein akustisches oder optisches Signal. Sollte er dies nicht tun, so wird für diesen Zeitraum ein extra Betrag berechnet. Es ist jedoch auch möglich, dass der Benutzer für das schnelle Schließen der Schublade Bonuspunkte erhält. Ein zeitnahes Zurückschieben der Schublade in das Gehäuse ermöglicht eine zeitnahe Reinigung, so dass die Grillstation mehreren unterschiedlichen Benutzern hintereinander zur Verfügung gestellt wird.

Mit der Steuerung der Grillstation können ferner die Benutzungszeiten geregelt werden. Dies bedeutet, dass der Betreiber der Grillstation genau die Benutzungszeiten festlegen kann. Dies ist insbesondere im öffentlichen Raum oder auf einem Campingplatz sinnvoll. Hier kann der Betreiber der Grillstation festlegen, dass die Grillstation beispielsweise nur von 9 Uhr morgens bis 21 Uhr abends benutzt werden kann. Außerhalb dieser Zeiten werden die angrenzenden Nachbarn nicht durch die Grillstation und deren Benutzung gestört.

Nachdem sich die Arbeitsstation in dem Gehäuse der Grillstation befindet, wird diese verriegelt und es beginnt der Reinigungsvorgang. Hierfür weist die erfindungsgemäße Grillstation eine Reinigungsanlage auf, welche eine Reinigung zumindest der Grillplatte durchführt.

Ein weiteres wesentliches Merkmal der Erfindung ist daher, dass im Gehäuse der Grillstation eine Reinigungskammer mit einer Reinigungsanlage vorhanden ist, welche mindestens die Grillplatte reinigt.

Bei einer bevorzugten Ausführungsform führt die Reinigungsanlage eine Pyrolyse durch. Dies bedeutet, dass sich die elektrische Heizvorrichtung so stark aufheizt, dass sämtliche Rückstände auf der Grillplatte vollkommen verbrannt werden.

Bei einer weiteren bevorzugten Ausführungsform ist die Reinigungsanlage als Waschanlage ausgebildet, welche eine Nassreinigung der Grillplatte durchführt. Die Ausführungsform der Reinigungsanlage als Waschanlagen ist aufgrund der geschlossenen Kreisläufe und der angepassten Reinigungstechnik sehr umweltfreundlich.

Für die Nassreinigung weist die Reinigungsanlage beispielsweise einen Frischwasser- und einen Abwassertank auf. Aus dem Frischwassertank und einem Tank mit Reinigungsflüssigkeit wird mit Hilfe einer Pumpe die Reinigungsflüssigkeit im Innenraum des Gehäuses der Grillstation auf die Oberfläche der Grillplatte gesprüht. Im Anschluss daran fährt eine rotierende Reinigungsbürste oder Reinigungswalze (Reinigungskopf mit Aufsatz) über die Oberfläche der Grillplatte und löst den Schmutz auf der Grillplatte. Danach wird Frischwasser auf die Oberfläche der Grillplatte gesprüht, um den Schmutz zu lösen und herunter zu spülen.

Um die Grillplatte zu trocknen, findet entweder eine Lufttrocknung mit einem Gebläse und/oder einem manuellen Abzieher statt. Der Abzieher weist hierfür eine Gummilippe auf, welche auf die Oberfläche der Grillplatte aufgesetzt wird und über die gesamte Oberfläche gezogen wird. Es ist ferner möglich, dass der Abzieher ein schwammartiges Material aufweist oder aus einem schwammartigen Material besteht.

Das entstandene Schmutzwasser wird in einem Abwasserbehälter gesammelt, gefiltert und teilweise für weitere Reinigungsvorgänge wiederverwendet.

Nach erfolgter Reinigung der Grillplatte steht die gesamte Grillstation dem nächsten Benutzer für einen Grillvorgang zur Verfügung. Bevorzugt dauert der Reinigungsvorgang etwa 15 Minuten, so dass eine gute Auslastung der Grillstation über den Tag verteilt erreicht wird.

Der Reinigungskopf weist beispielsweise eine Bürste, ein textiles Waschmaterial oder PE-Schaumstoffstreifen auf. Bevorzugt ist der Reinigungskopf rotierend ausgebildet und weist einen Draht- oder Nylonbürstenkopf auf. Der Reinigungskopf kann ferner als Reinigungswalze ausgebildet sein.

Bei einer bevorzugten Ausführungsform führt der mechanische Reinigungskopf eine Bewegung in x- und/oder y-Richtung durch, wobei der Reinigungskopf jeden Teilbereich der Oberfläche der Grillplatte mechanisch reinigt.

Bevorzugt ist der Reinigungskopf als Bürste (oder Walze) ausgebildet, welche den bereits eingeweichten Dreck aufgrund einer rotierenden Drehbewegung (mechanische Bearbeitung) entfernt. Unter Entfernen versteht die vorliegende Erfindung ein Lösen des Dreckes. Es ist ferner teilweise möglich, dass der Dreck durch die rotierende Drehbewegung von der Oberfläche der Grillplatte heruntergeschleudert wird.

Im Anschluss an die mechanische Bearbeitung der Grillplatte mit dem Reinigungskopf wird über die Düsen eine Flüssigkeit auf die Grillplatte gespritzt. Dadurch werden die verbleibenden Rückstände von der Grillplatte runtergespritzt.

Um die Oberfläche der Grillplatte zu trockenen wird diese mit einem mechanischen Schieber abgezogen. Bei dem Schieber handelt es sich um einen Abzieher, welcher bevorzugt so breit wie die Grillplatte ausgebildet ist. Der Abzieher weist beispielsweise eine Gummilippe auf, welche auf die Oberfläche der Grillplatte aufgesetzt wird. Die Anordnung einer Gummilippe an dem Abzieher ist jedoch nicht hier beschränkend anzusehen, es kann vielmehr auch ein Schwamm oder eine weitere Bürste hierfür eingesetzt werden.

Nach dem Abziehen mit dem Abzieher kann noch einmal Frischwasser auf die Grillplatte aufgesprüht werden. Das Aufsprühen von Frischwasser kann beispielsweise auch dann erfolgen, wenn die Grillstation für einen gewissen Zeitraum nicht benutzt wurde.

Es ist ferner möglich, dass nach dem Reinigungsvorgang die Heizvorrichtung kurz eingeschaltet wird, um die Grillplatte zu trockenen.

Bevorzugt findet eine solche Reinigung nach jedem Grillvorgang statt. Der Reinigungsvorgang dauert ungefähr zwischen 5 bis 15 Minuten. Nach dem Reinigungsvorgang ist die Grillplatte vollkommen sauber und steht dem nächsten Benutzer zur Verfügung.

Die automatische Reinigung nach jedem Grillvorgang ist jedoch nicht hierauf beschränkt. Es ist vielmehr auch möglich, dass die Grillstation sich bei einer Nichtbenutzung einmal tätlich selbst reinigt, so dass stets eine saubere Grillplatte dem Benutzer zur Verfügung steht und der Grillvorgang sofort gestartet werden kann.

Bei einer weiteren bevorzugten Ausführungsform können die Rückstände und/oder nur die Flüssigkeiten von der Grillplatte mit einer Saugvorrichtung abgesaugt werden.

Des Weiteren ist es möglich, dass innerhalb der Reinigungskammer über die Düsen ein Reinigungsalkohol auf die Grillplatte gespritzt wird, welcher verdunstet und damit eine Reinigung stattfindet, ohne dass eine mechanische Bearbeitung der Grillplatte notwendig ist.

Mit der erfindungsgemäßen Grillstation steht mehreren Benutzern hintereinander stets eine Arbeitsstation mit einer sauberen Grillplatte zur Verfügung. Durch die elektrische Heizvorrichtung entsteht kein Rauch und es besteht keine Brandgefahr, da sämtliche elektrische Zuleitungen und Vorrichtungen durch Sicherungen (FI) abgesichert sind.

Des Weiteren ist das Gehäuse der Grillstation gedämmt und weist dadurch heißen Außenflächen auf. Dies ist ein wesentlicher Vorteil, wenn z.B. Kinder bei dem Grillvorgang anwesend sind.

Es zeigen:
- Figur 1:: schematische, perspektivische Darstellung der Grillstation
- Figur 2:: schematische, perspektivische Darstellung der Grillstation mit geöffnetem Gehäuse;
- Figur 3:: Seitenansicht der Grillstation
- Figur 4:: Seitenansicht der Grillstation
- Figur 5:: perspektivische Frontansicht der Grillstation
- Figur 6:: perspektivische Rückansicht der Grillstation
- Figur 7:: Rückansicht der Grillstation mit geöffneter Serviceklappe
- Figur 8:: Schnitt durch die erfindungsgemäße Grillstation mit Darstellung in der Seitenansicht
- Figur 9:: Draufsicht im Schnitt von der erfindungsgemäßen Grillstation
- Figur 10:: Draufsicht im Schnitt mit Bewegungsablauf der Reinigungsanlage
- Figur 11:: perspektivische Darstellung der erfindungsgemäßen Grillstation mit Reinigungsdüsen.

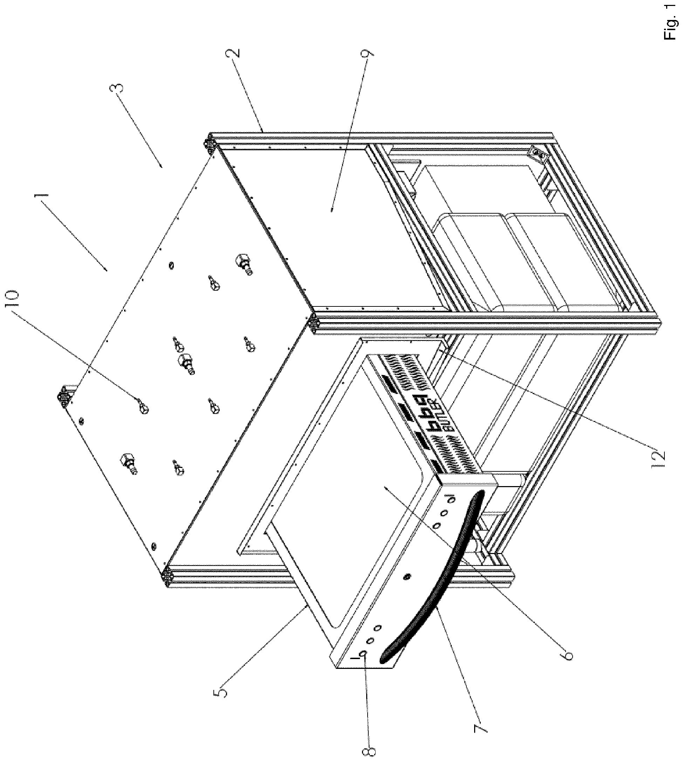

Mit der Figur 1 wird eine perspektivische Darstellung der erfindungsgemäßen Grillstation 1 gezeigt. Die Grillstation 1 weist bevorzugt ein geschlossenes Gehäuse 3 auf, wobei die Rahmenteile 2 vollkommen von Platten umgeben sind. Die Abdeckungen und das Gehäuse 3 bestehen aus einem harten Werkstoff, wie beispielsweise Edelstahl, Alu oder dergleichen, so dass die gesamte Grillstation gegen einen Manipulations- oder Sabotageversuch gesichert ist.

Das Gehäuse 3 ist in zwei Bereiche unterteilt. Im oberen Bereich befindet sich die Arbeitsstation 44 mit der Heizvorrichtung 5 und der Grillplatte 6, sowie die Reinigungskammer 9 mit der Reinigungsanlage 43. Im unteren Bereich befinden sich der Abwassertank 35, der Frischwassertank 36, eine Pumpe, sowie eine Steuerungsbox 37. Bevorzugt sind alle Bereiche des Gehäuses 3 geschlossen und somit nicht von außen zugänglich. Lediglich einige Teilbereiche sind durch eine verschließbare Serviceklappe 19 zugänglich. Gemäß der Figur 1 befinden sich auf der Oberseite des Gehäuses 3 die Anschlüsse 10 für die Reinigungsdüsen 11, welche während des Reinigungsvorganges die Reinigungsflüssigkeit auf die Heizvorrichtung 5 bzw. Grillplatte 6 spritzen.

Die Arbeitsstation 44 ist als Schublade 4 ausgebildet, in welche die Heizvorrichtung 5 mit der Grillplatte 6 integriert ist. Die Arbeitsstation 44 ist in Pfeilrichtung 45 horizontal bewegbar und lässt sich aus dem Gehäuse 3 herausziehen und wieder in das Gehäuse 3 schieben.

Für die horizontale Führung der Schublade 4 weist diese zwei Auszugsschienen auf. Die Auszugsschienen sind ferner mit einem Magnet gekoppelt, so dass die Schublade 4 in der Endlage arretiert wird. Beim Einschieben der Schublade 4 in das Gehäuse 3 muss die Magnetkraft überwunden werden.

An der Stirnseite der Schublade 4 ist ein Griff 7 angeordnet. Der Griff 7 ist thermisch isoliert ausgebildet, wodurch ein Aufheizen des Griffs 7 während der dem Grillvorgang mit der Heizvorrichtung 5 verhindert wird. Des Weiteren befinden sich an der Stirnseite der Schubladen 4 die Bedienelemente 8 zur Steuerung der Heizvorrichtung 5.

Mit den Bedienelementen 8 wird nicht nur die Heizvorrichtung 5 ein- und ausgeschaltet, sondern auch die verschiedenen Grillbereiche und die unterschiedlichen Temperaturstufen geregelt. Gemäß der Figur 1 sind die Bedienelemente 8 als Drucktaster ausgebildet. Diese funktionieren nur, wenn die Schublade 5 komplett aus dem Gehäuse 3 der Grillstation 1 herausgezogen ist.

Unterhalb der Schublade 6 befindet sich ein Ablaufblech 12, welches die Flüssigkeiten von der Grillplatte 6 auffängt und in einen Kanister bzw. ein Behältnis innerhalb des Gehäuse 3 leitet.

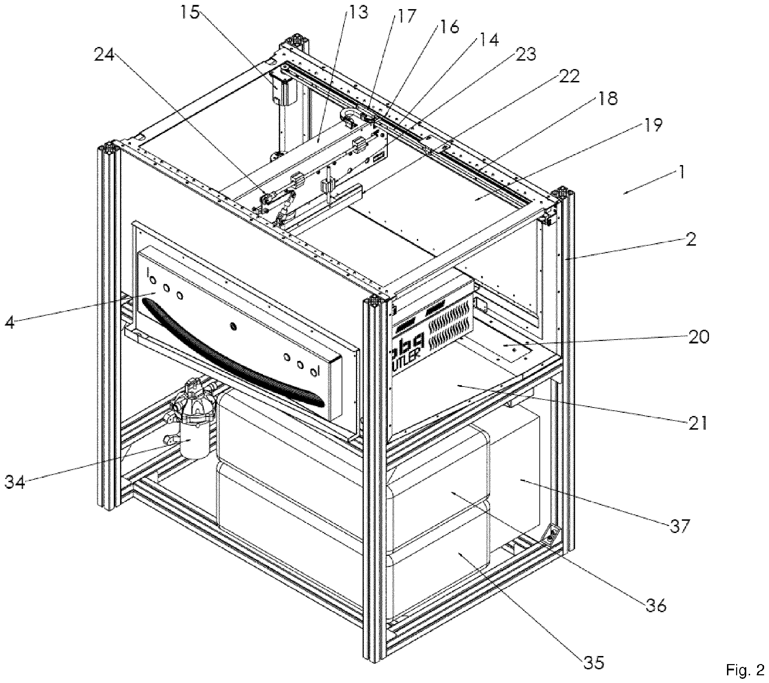

Mit der Figur 2 wird eine perspektivische Darstellung der Grillstation 1 gezeigt, wobei das Gehäuse 3 im offenen Zustand dargestellt ist.

Im oberen Bereich des Gehäuses 3 befindet sich die Reinigungskammer 9 mit der Reinigungsanlage 43. Die Reinigungsanlage 43 weist einen Reinigungsarm 13 auf, welcher mit einem Schlitten 17 verbunden ist, der entlang einer Linearführung 16 geführt wird. Der Antrieb erfolgt über zwei Antriebsmotoren 15 und einen Riementrieb 14. Unter einem Riementrieb werden sämtliche Antriebsart bzw. Kraftübertragungsarten verstanden. Dies kann beispielsweise einen Riemen, eine Kette, ein Hydraulikzylinder, ein Pneumatik-Zylinder oder dergleichen sein.

Die Bewegungsrichtung des Reinigungsarms 13 erfolgt in x- und y-Richtung. Bevorzugt wird der Reinigungsarms 13 über die gesamte Länge und Breite der Grillplatte 6 bewegt. Der Riementrieb 14 wird mit durch die zwei Antriebsmotoren 15 angetrieben, welche sich in den Eckbereichen des Rahmens 2 des Gehäuses 3 befinden und über die Umlenkrollen 25 den Riementrieb 14 antreiben.

Die Reinigungsanlage 43 weist ferner einen Abzieher 22 auf, welcher die Rückstände von der Grillplatte 6 der Heizvorrichtung 5 abzieht. Der Abzieher 22 lässt sich über eine Führungsvorrichtung 23 in vertikaler Richtung auf die Grillplatte auf- und absenken. Nach dem Aufsetzen des Abziehers 22 auf der Oberfläche der Heizplatte 6, wird dieser in y-Richtung (Pfeilrichtung 10) bewegt.

Die Führungsvorrichtung 23 für den Abzieher 22 wird durch den Antrieb 24 bewegt. Über einen Hebelmechanismus lässt sich somit der Abzieher 22 durch den Antrieb 24 vertikal nach oben und unten bewegen.

Aus der Figur 2 das an sich geschlossene Gehäuse 3 an der Rückseite eine Serviceklappe 19 aufweist, durch welche sämtliche Komponenten der Reinigungsanlage 43 zugänglich sind.

Unterhalb der Heizvorrichtung 5 ist eine Bodenplatte 21 angeordnet, welche geneigt ausgebildet ist, so dass bei dem Reinigungsvorgang der Grillplatte 6 die Flüssigkeiten und die Rückstände über die geneigte Bodenplatte in den hinteren Bereich des Gehäuses 3 auflaufen und dort von einem Auffangbehälter 20 aufgefangen werden.

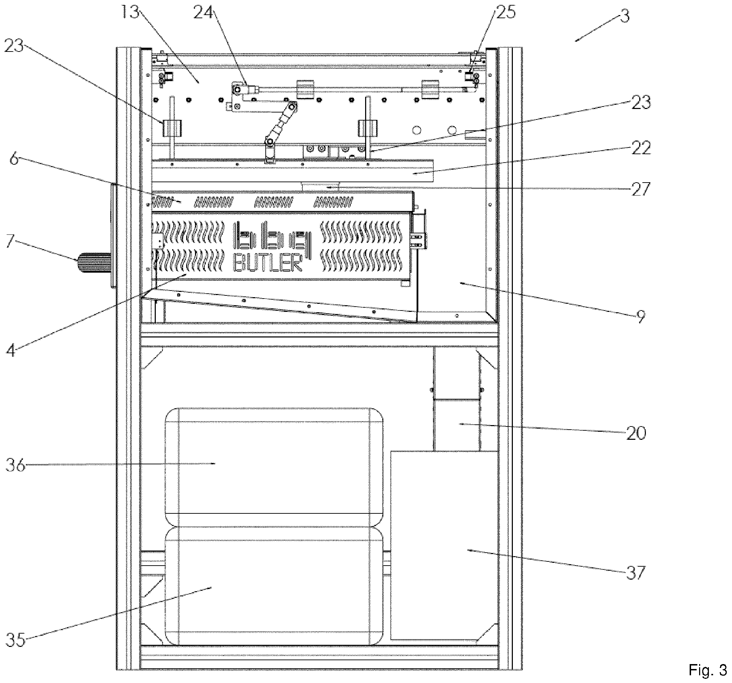

Figur 3 zeigt eine Schnittdarstellung der Grillstation 1. Es wird die Position gezeigt, welche die Arbeitsstation 44 vor, während oder nach dem Reinigungsvorgangs der Grillplatte 6 hat.

Die Arbeitsstation 44 ist als Schublade 4 ausgebildet, welche in Pfeilrichtung 45 bewegbar ist. Gemäß der Figur 3 befindet sich die Arbeitsstation 44 sich innerhalb des Gehäuses 3. Dies bedeutet, dass die Schublade 4 mit der Heizvorrichtung 5 und der Grillplatte 6 sich innerhalb des Gehäuses 3 befinden und von außen nicht zugänglich ist bzw. nicht benützt werden kann.

Die Heizvorrichtung 5 ist in der Schublade 4 integriert bzw. mit der Schublade 4 verbunden. Oberhalb der Heizvorrichtung 5 befindet sich die Grillplatte 6, auf welcher die Zubereitung der Speisen erfolgt. Der Grillvorgang findet ausschließlich auf der Grillplatte 6 statt. Die Grillplatte 6 ist als glatte Platte ausgebildet und dadurch leicht zu reinigen. Es ist jedoch auch möglich, dass diese Grillplatte 6 als Grillrost oder dergleichen ausgebildet ist.

Innerhalb der Reinigungskammer 9 befindet sich die Reinigungsanlage 43, welche im Wesentlichen aus den Reinigungsdüsen 11, dem Reinigungskopf 27, sowie dem Abzieher 22 besteht. Satt dem Abzieher 22 kann auch ein Gebläse für eine Trocknung der Grillplatte 6 vorhanden sein.

Im hinteren Bereich der Reinigungskammer 9 ist der Auffangtrichter 20 vorhanden, welcher die gesamte Flüssigkeit, welche während des Reinigungsvorganges entsteht, auffängt und gegebenenfalls für weitere Reinigungsvorgänge zur Verfügung stellt.

Im unteren Bereich des Gehäuses 3 befinden sich der Frischwassertank 36 und Abwassertank 35, sowie die Steuerungsbox 37, mit welcher die gesamte Grillstation 1 gesteuert wird.

Bevorzugt wird während des Reinigungsvorganges mit der Reinigungsanlage 43 die gesamte Flüssigkeit von dem Auffangtrichter 20 aufgefangen und dem Abwassertank 35 zugeführt. Bei dem folgenden Reinigungsvorgang wird teilweise das Wasser aus dem Abwassertank 35 und dem Frischwassertank 36 kombiniert. Dadurch werden Ressourcen geschont und weniger Betriebsstoffe verwendet.

Aus der Figur 3 ergibt sich ferner, dass der Abzieher 22 durch den Antrieb 24 und der Führungsvorrichtung 23 in vertikaler Richtung (z-Richtung) auf die Grillplatte 6 der Heizvorrichtung 5 aufgesetzt und wieder hiervon hochgehoben werden kann. Mit Hilfe des Abzieher 22 wird Flüssigkeit und die verbleibenden Rückstände von der Grillplatte 6 heruntergezogen. Nach dem Abziehvorgang mit dem Abzieher 22 ist die Oberfläche der Grillplatte 6 wieder vollkommen frei von Verschmutzungen oder Grillrückständen. Sollten dennoch weitere Rückstände nach dem Abziehen mit dem Abzieher 22 vorhanden sein, so wird diese von der Reinigungsanlage optisch festgestellt und entweder weiteres Frischwasser über die Reinigungsdüsen 11 auf die Oberfläche der Grillplatte 6 gesprüht oder der Reinigungsvorgang erneut gestartet.

Gemäß der Figur 3 befindet sich der Reinigungskopf 27, welcher bevorzugt als Bürste ausgebildet ist, bereits auf der Grillplatte 6, um durch eine rotierende, mechanische Bewegung die Oberfläche der Grillplatte 6 zu reinigen.

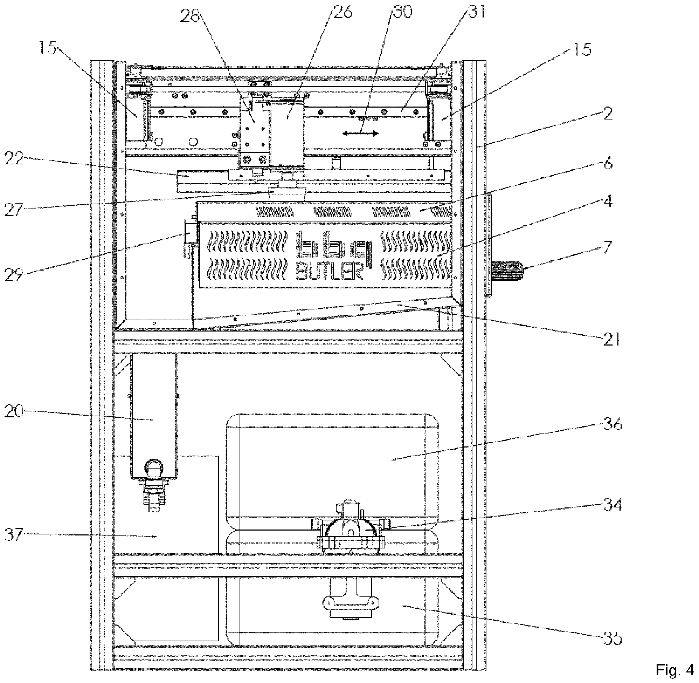

Figur 4 zeigt eine weitere Seitenansicht von der Grillstation 1, wobei sich der Reinigungskopf 27 auf der Grillplatte 6 befindet und durch eine rotierende Bewegung eine mechanische Reinigung der Grillplatte 6 durchführt. Der Reinigungskopf 27 wird von dem Antrieb 26 angetrieben, wobei der Antrieb 26 über die Höhenverstellung 28 auf die Grillplatte 6 aufsetzbar und hochhebbar ist. Die Höhenverstellung 28 führt somit eine Bewegung des Reinigungskopfes 27 in z-Richtung aus und setzt den Reinigungskopf auf die Grillplatte 6 auf bzw. hebt ihn von der Grillplatte 6 wieder ab.

Die beiden Antriebsmotoren 15 bewegen den Reinigungsarm 13 in x- und y-Richtung, so dass den Reinigungskopf 27 in x- und y-Richtung bewegt.

Die Antriebsmotoren 15 haben hierbei eine Doppelfunktion, d. h. sie treiben den Reinigungskopf 27 sowohl in x als auch in y-Richtung an.

Die Heizvorrichtung 5 weist eine Ablaufrinne 29 auf, welche die Fette und Öle auffängt, die sich während dem Grillvorgang auf der Grillplatte 6 ansammeln. Die Ablaufrinne 29 führt die Fette und Öle entweder dem Abwassertank 35 oder einem separaten Behälter zu.

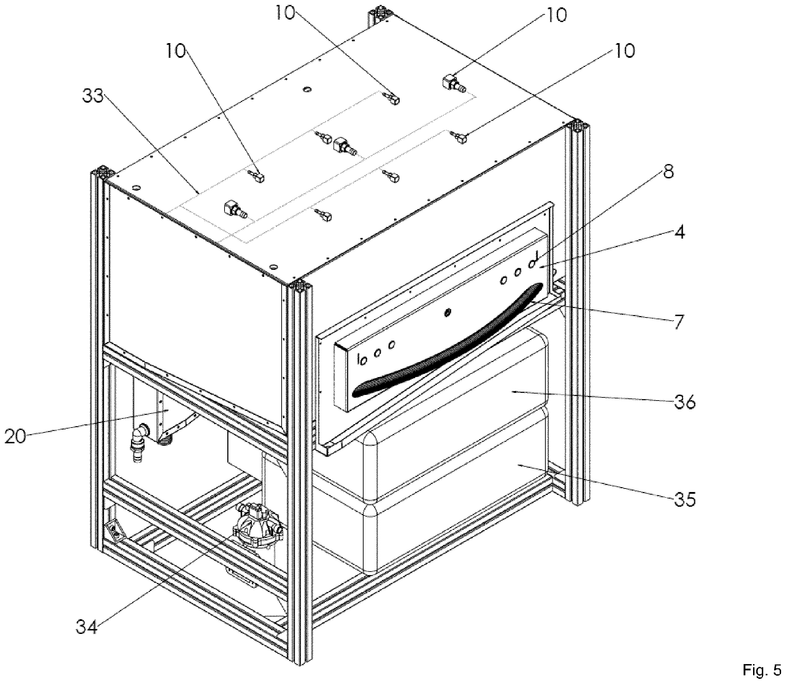

Mit der Figur 5 wird eine weitere perspektivische Darstellung der Grillstation 1 gezeigt. Im unteren Bereich des Gehäuses 3 befinden sich der Abwassertank 35 und der Frischwassertank 36. Neben den beiden Tanks 35, 36 ist die Pumpe 34 angeordnet, welche die Flüssigkeiten innerhalb der Reinigungskammer 9 fördert. Neben den beiden Tanks 35 und 36 ist ein zusätzlicher Tank mit Reinigungsflüssigkeit vorhanden, welche dem Wasser während des Reinigungsvorgang beigemischt wird.

Im hinteren Bereich des Gehäuses 3 befindet sich der Auffangtrichter 20, welcher über den Abfluss das Abwasser dem Abwassertank 35 zuführt.

Die Arbeitsstation 44 ist komplett in das Gehäuse 3 eingeschoben. Die Schublade 4 ist in diesem Zustand verriegelt und kann nicht ohne einen Entriegelungsvorgang bzw. ohne einen Buchungsvorgang aus dem Gehäuse 3 gezogen werden.

Auf der Stirnseite der Schublade 4 befindet sich der Griff 7 und die Bedienelemente 8. Gemäß der Figur 5 sind drei Bedienelemente 8 auf jeder Seite angeordnet, wobei jedes der drei Bedienelemente 8 jeweils einen Heizkreis steuern. In der Mitte der Schublade befindet sich ein Entriegelungsknopf, mit welchem der Heizvorgang des Heizvorrichtung gestartet und wieder gestoppt wird.

Auf der Oberseite des Gehäuses 3 befinden sich die Anschlüsse 10 für die Düsen 42. Bevorzugt wird während des Reinigungsvorgangs stets nur Flüssigkeiten von oben auf die Grillplatte 6 gesprüht. Es ist jedoch auch möglich, dass sich an den Seitenwänden des Gehäuses 3 weitere Düsen 42 befinden, über welche die Flüssigkeit auf die Grillplatte 6 gesprüht wird. Die Reinigungsanschlüsse 10 sind bevorzugt über die Schlauchverbindung 33 miteinander verbunden, wobei die Schlauchverbindung 33 über die Reinigungsflüssigkeit durch die Pumpe 34 aus dem unteren Teil des Gehäuses 3 erhält.

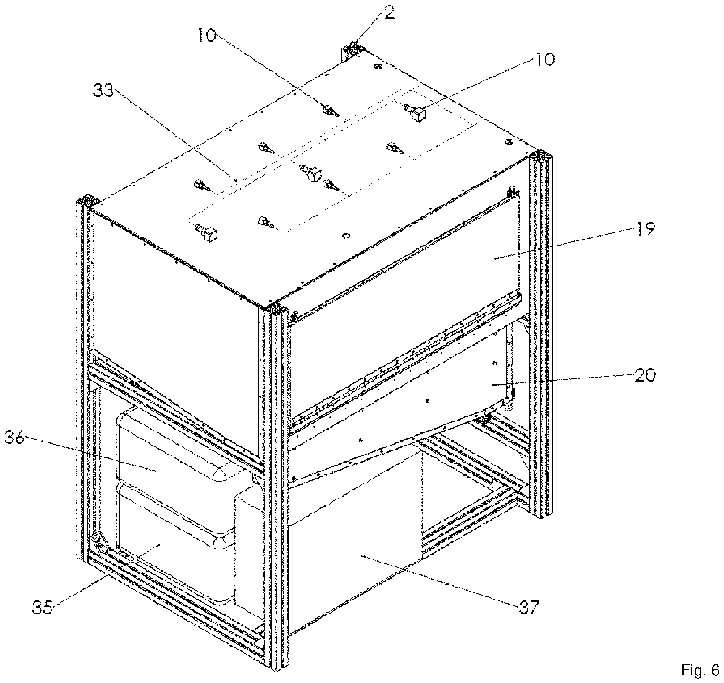

Mit der Figur 6 wird eine Rückansicht der Grillstation 1 gezeigt, wobei sich auf der Oberseite des Gehäuses 3 die Anschlüsse 10 für die Reinigungsdüsen 11 befinden. Im hinteren Bereich ist der Auffangtrichter 20 dargestellt, welcher die Flüssigkeit nach dem Reinigungsvorgang auffängt und diese dem Abwassertank 35 zuführt.

Die Steuerungsbox 37 steuert die komplette Grillstation 1. Dies ist beispielsweise der Entriegelung und Verriegelungsvorgang der Arbeitsstation44. Die Schnittstelle zwischen der Buchsplattform und der Grillstation. Des Weiteren steuert die Steuerungsbox 37 den gesamten Reinigungsvorgang der Grillplatte 6 durch die Reinigungsanlage 43.

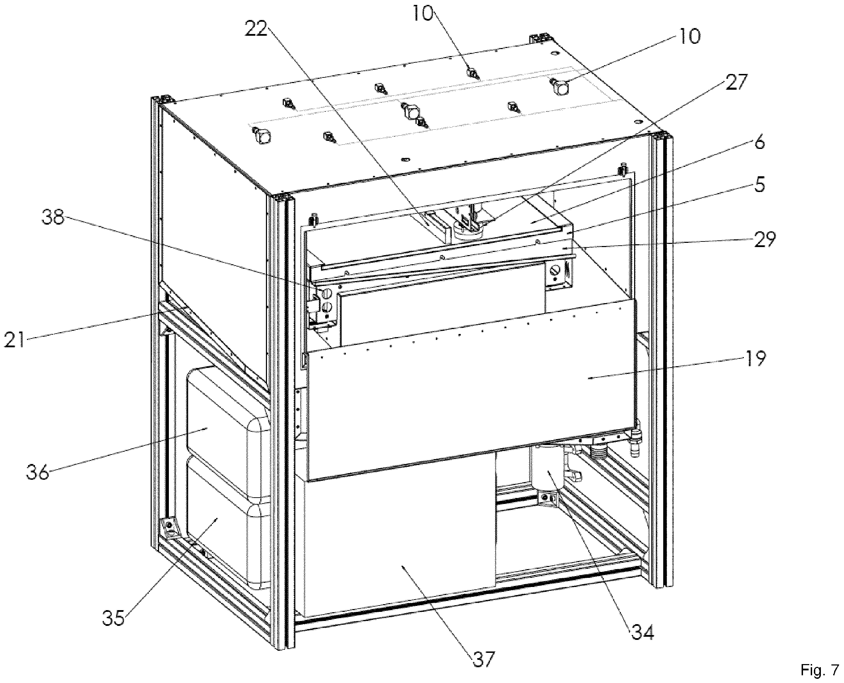

Mit der Figur 7 wird eine weitere Rückansicht der Grillstation 1 gezeigt, wobei das Gehäuse 3 über die Reinigungsklappe 9 frei zugänglich ist. Die Reinigungsklappe 9 ist verschließbar ausgebildet und ist nur von dem Betreiber oder einem Servicetechniker zugänglich.

Durch die Reinigungsklappe 9 lässt sich ferner erkennen, dass sich der Reinigungskopf 27 auf der Grillplatte 6 befindet und dort eine mechanische Reinigung der Grillplatte 6 durchführt. Der Reinigungskopf 27 ist von dem Antrieb 26 angetrieben und führt während des Reinigungsvorganges eine Bewegung in x- und y-Richtung aus.

Die Heizvorrichtung 5 ist über die Anschlüsse 38 mit der Steuerungsbox 37 verbunden ist, welche den gesamten Heizvorgang der Heizvorrichtung 5 steuert.

Im unteren Bereich des Gehäuses 3 ist die Pumpe 34 angeordnet. Die Pumpe 34 wird ebenfalls von der Steuerungsbox 37 angesteuert. Bevorzugt werden zwei unterschiedliche Pumpen 34 eingesetzt, wobei die erste Pumpe für das Reinigungsmittel und die zweite Pumpe für das Frischwasser eingesetzt wird.

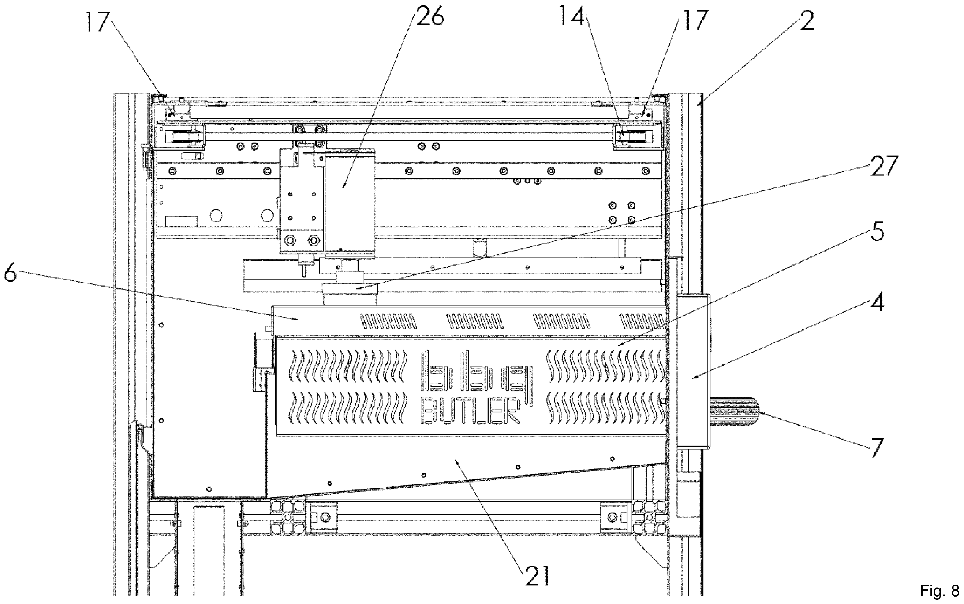

Figur 8 zeigt eine weitere Schnittdarstellung der Grillstation 1. Die Führungsvorrichtung 23 ist über die Kabelverbindung 40 mit der Steuerungsbox 37 verbunden. Die Arbeitsstation 44 ist als Schublade 3 ausgebildet. In die Schublade 3 ist die Heizvorrichtung 5 integriert. Oberhalb der Heizvorrichtung 5 befindet sich die Grillplatte 6.

Auf der Oberfläche der Grillplatte 6 befindet sich gemäß der Figur der Reinigungskopf 27, welcher von dem Antrieb 26 rotierend angetrieben wird und dadurch die Verschmutzung auf der Oberfläche der Grillplatte 6 entfernt. Der Antrieb 26 für den Reinigungskopf 27 ist an dem Reinigungsarm 13 angeordnet, welche über den Schlitten 17 x und y-Richtung (Pfeilrichtung 32) bewegt wird.

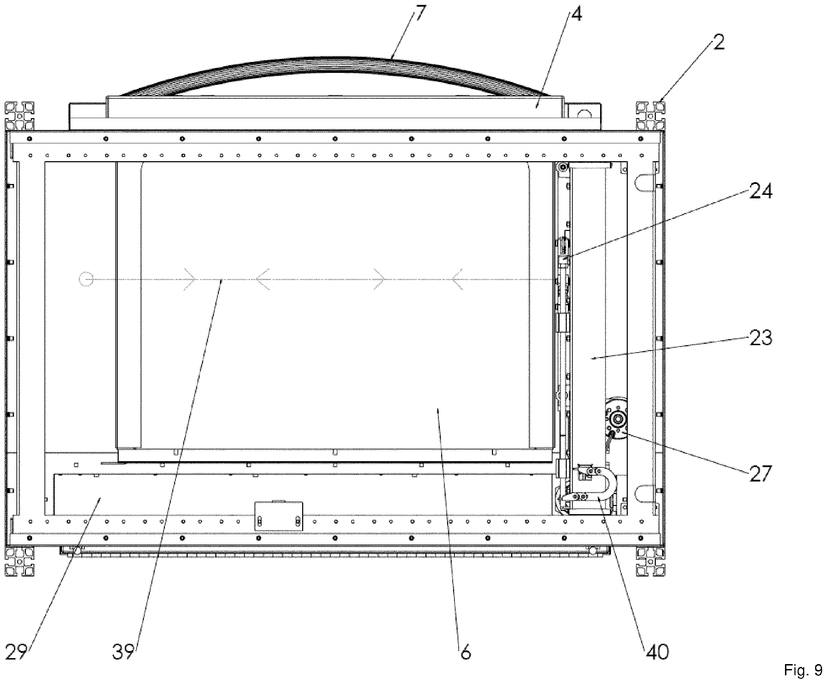

Figur 9 zeigt eine schematische Draufsicht auf die Grillplatte 6. Mit dem Bezugszeichen 39 ist die Bewegungsrichtung des Abziehers 22 während des Reinigungsvorganges dargestellt. Die Bewegung des Abziehers 22 erfolgt in y-Richtung, wobei der Abzieher 22 auf der Oberfläche der Grillplatte 6 aufsetzt und somit sämtliche Flüssigkeiten und/oder Rückstände von der Grillplatte 6 abzieht. Der Abzieher 22 wird von der Führungsvorrichtung 23 und dem Antrieb 24 in z-Richtung 28 nach oben und unten in Richtung der Oberfläche der Grillplatte 6 bewegt.

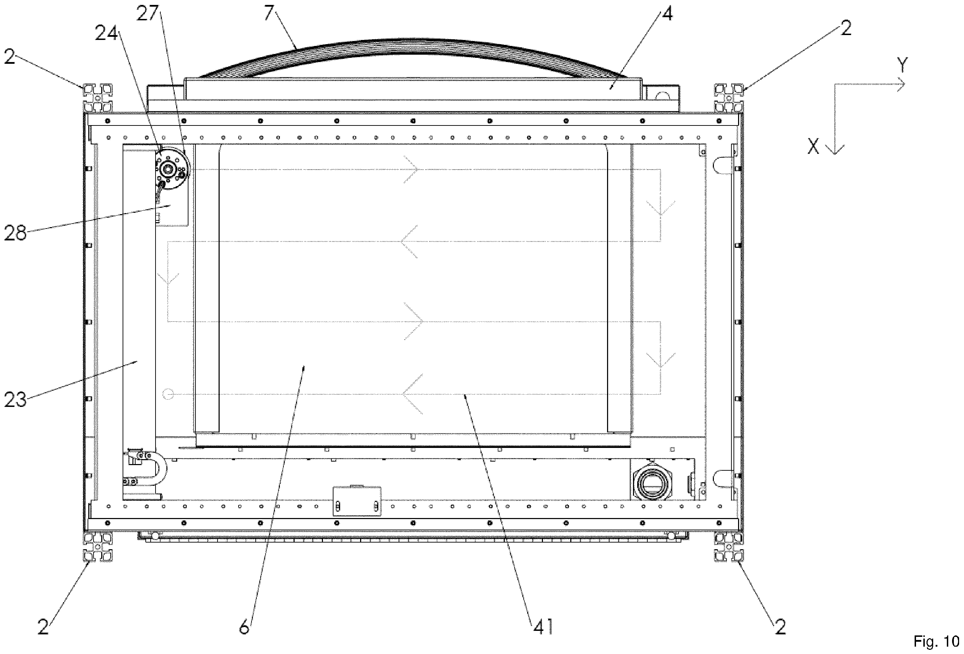

Mit der Figur 10 wird eine weitere Draufsicht auf die Grillplatte 6 und beispielhaft ein Bewegungsablauf des Reinigungskopfes 27 auf der Oberfläche der Grillplatte 6 während des Reinigungsvorganges gezeigt. Der Bewegungsablauf des Reinigungskopfes 27 ist mit den Pfeilen der Bewegungsrichtung 41 dargestellt ist. Der Bewegungsablauf kann beispielsweise eine Pendelbewegung oder eine Streifenbewegung sein.

Bevorzugt führt der Reinigungskopf 27 eine Bewegung gemäß der Figur 10 aus. Dies bedeutet, dass der Reinigungskopf 37 zunächst über die gesamte Länge der Grillplatte 6 fährt (Y-Richtung). Danach findet eine Bewegung in x-Richtung statt, wobei die Bewegung in etwa dem Durchmesser des Reinigungskopfes 37 entspricht. Im Anschluss daran fährt der Reinigungskopf 37 wieder in y-Richtung zurück. Dieser Bewegungsablauf wird so oft wiederholt bis alle Bereiche auf der Grillplatte 6 von dem Reinigungskopf 27 bearbeitet wurden.

Aus der Figur 10 ergibt sich zwar noch nicht die Höhenverstellung 28, jedoch ist die Bürste derart gelagert, dass sie sich stets der in z-Richtung an der Kontur der Grillplatte 6 anpasst.

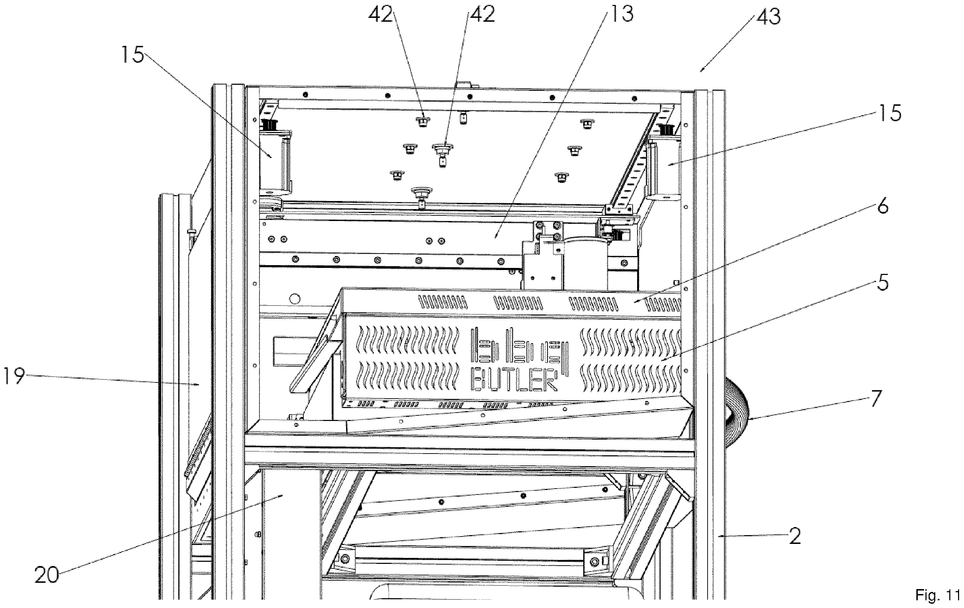

Mit der Figur 11 wird eine weitere perspektivische Darstellung der Grillstation 1 und des Gehäuses 3 gezeigt. Gemäß der Figur 11 befinden sich an der Gehäuseoberseite im Inneren die Düsen 42, über welche die Reinigungsflüssigkeit in die Reinigungskammer 9 eingesprüht wird. Die Düsen 42 sind Bestandteil der Reinigungsanlage 43, mit welcher die Grillplatte 6 der Heizvorrichtung 5 gereinigt wird.

Die Grillstation 1 führt somit automatisch eine Selbstreinigung durch, so dass stets eine saubere Grillplatte 6 für den folgenden Grillvorgang zur Verfügung steht. Die Reinigung erfolgt durch eine Nassreinigung, wodurch sämtliche Rückstände von der Oberfläche der Grillplatte 6 gelöst werden.

### Zeichnungslegende

- 1: Grillstation
- 2: Rahmen
- 3: Gehäuse
- 4: Schublade
- 5: Heizvorrichtung
- 6: Grillplatte
- 7: Griff
- 8: Bedienelement
- 9: Reinigungskammer
- 10: Anschlüsse von Reinigungsdüse
- 11: Reinigungsdüse
- 12: Ablaufblech
- 13: Reinigungsarm
- 14: Riementrieb
- 15: Antriebsmotor für 13, 14
- 16: Linearführung
- 17: Schlitten (Linearschlitten)
- 18: Linearschiene
- 19: Serviceklappe
- 20: Auffangtrichter
- 21: Bodenplatte
- 22: Abzieher
- 23: Führungsvorrichtung für 22
- 24: Antrieb für 22, 23
- 25: Umlenkrolle
- 26: Antrieb für 27
- 27: Reinigungskopf
- 28: Höhenverstellung für 26 (z-Achse)
- 29: Ablaufrinne
- 30: Pfeilrichtung von 26, 27
- 31: Linearschiene für 26 (x-Achse)
- 32: X- Y-Führung
- 33: Schlauchverbindung
- 34: Pumpe
- 35: Abwassertank
- 36: Frischwassertank
- 37: Steuerungsbox
- 38: Anschlüsse für 5
- 39: Bewegungsrichtung von 22
- 40: Kabelverbindung
- 41: Bewegungsrichtung für 27
- 42: Düse
- 43: Reinigungsanlage
- 44: Arbeitsstation
- 45: Pfeilrichtung für Bewegung von 44

## Patentansprüche

1. Grillstation (1) für die Zubereitung von Speisen bestehend aus einer Arbeitsstation (44), welche in einem Gehäuse (3) der Grillstation (1) angeordnet ist, wobei die Arbeitsstation (44) mindestens eine Heizvorrichtung (5) aufweist, welche mindestens eine Grillplatte (6) erhitzt, **dadurch gekennzeichnet, dass** die Arbeitsstation (44) als Schublade (4) ausgebildet ist, in welche die Heizvorrichtung (5) und die Grillplatte (6) integriert ist, wobei mindestens während des Grillvorganges die Arbeitsstation (44) aus dem Gehäuse (3) der Grillstation (1) in eine Arbeitsstellung herausziehbar ist und dass im Gehäuse (3) der Grillstation (1) eine Reinigungskammer (9) mit einer Reinigungsanlage (43) vorhanden ist, welche mindestens die Grillplatte (6) reinigt.

2. Grillstation (1) für die Zubereitung von Speisen bestehend aus einer Arbeitsstation (44), welche in einem Gehäuse (3) der Grillstation (1) angeordnet ist, wobei die Arbeitsstation (44) mindestens eine Heizvorrichtung (5) aufweist, welche mindestens eine Grillplatte (6) erhitzt, **dadurch gekennzeichnet, dass** die Arbeitsstation (44) klappbar an dem Gehäuse (3) der Grillstation (1) angeordnet ist, wobei mindestens während des Grillvorganges die Arbeitsstation (44) in eine Arbeitsstellung ausklappbar ist und dass im Gehäuse (3) der Grillstation (1) eine Reinigungskammer (9) mit einer Reinigungsanlage (43) vorhanden ist, welche mindestens die Grillplatte (6) reinigt.

3. Grillstation (1) nach Anspruch 1 oder 2, **dadurch gekennzeichnet, dass** die Reinigungsanlage (43) als Nassreinigungsanlage ausgebildet ist.

4. Grillstation (1) nach einem der Ansprüche 1 bis 3, **dadurch gekennzeichnet, dass** mindestens eine Düse (11, 42) eine Flüssigkeit auf eine Oberfläche der Grillplatte (6) sprüht und mindestens ein Reinigungskopf (27) eine mechanische Reinigung auf der Oberfläche der Grillplatte (6) durchführt.

5. Grillstation (1) nach einem der Ansprüche 1 bis 4, **dadurch gekennzeichnet, dass** die Reinigungsanlage (43) mindestens einen Abzieher (22) aufweist, welcher auf die Oberfläche der Grillplatte (6) aufsetzbar ist und durch eine Linearbewegung Rückstände von der Oberfläche der Grillplatte (6) entfernt.

6. Grillstation (1) nach einem der Ansprüche 1 bis 5, **dadurch gekennzeichnet, dass** die Reinigungsanlage (43) eine Linearführung (16) für einen Schlitten (17) aufweist, an welchem ein Antrieb (26) für den Reinigungskopf (27) angeordnet ist, wobei der Schlitten (17) über einen Riementrieb (14) und mindestens einem Antriebsmotor (15) in x- und/oder y-Richtung auf der Oberfläche der Grillplatte (6) bewegbar ist.

7. Grillstation (1) nach einem der Ansprüche 1 bis 6, **dadurch gekennzeichnet, dass** die Grillstation (1) über eine Anwendungssoftware (APP) steuerbar ist, welche die Arbeitsstation (43) der Grillstation (1) für den Grillvorgang freigibt.

8. Grillstation (1) nach einem der Ansprüche 1 bis 7, **dadurch gekennzeichnet, dass** die Grillstation über eine Anwendungssoftware (APP) für einen bestimmten Zeitraum buchbar ist, wobei zwischen einer Steuerungsbox (37) der Grillstation (1) und der Anwendungssoftware einen Datenaustausch stattfindet und die Steuerungsbox (37) in Abhängigkeit von dem Buchungsvorgang die Arbeitsstation (44) der Grillstation (1) und die Heizvorrichtung (5) für den Grillvorgang aktiviert und/oder deaktiviert.

9. Verfahren zum Betrieb einer Grillstation (1) für die Zubereitung von Speisen, wobei eine Arbeitsstation (44) in einem Gehäuse (3) der Grillstation (1) angeordnet ist, welche mindestens eine Heizvorrichtung (5) zum Erhitzen von mindestens eine Grillplatte (6) aufweist, **dadurch gekennzeichnet, dass**
9.1 die Arbeitsstation (44) als Schublade (4) ausgebildet ist, in welche die Heizvorrichtung (5) und die Grillplatte (6) integriert ist, wobei während des Grillvorganges die Arbeitsstation (44) aus dem Gehäuse (3) der Grillstation (1) in eine Arbeitsstellung herausziehbar ist;
9.2 nach dem Grillvorgang die Arbeitsstation (44) in das Gehäuse (3) der Grillstation (1) zurückgeschoben wird;
9.3. im Gehäuse (3) der Grillstation (1) eine Reinigungskammer (9) mit einer Reinigungsanlage (43) vorhanden ist, welche mindestens die Grillplatte (6) reinigt.

10. Verfahren zum Betrieb einer Grillstation (1) nach Anspruch 9, **dadurch gekennzeichnet, dass** die Reinigungsanlage (43) eine Nassreinigung durchführt, welche aus mindestens den folgenden Schritten besteht:
10.1 mindestens eine Düse (11, 42) sprüht eine Flüssigkeit auf eine Oberfläche der Grillplatte (6);
10.2 mindestens ein Reinigungskopf (27) führt eine mechanische Reinigung auf der Oberfläche der Grillplatte (6) aus;
10.3 mindestens ein Abzieher (22) zieht mit einer Linearbewegung die Oberfläche der Grillplatte (6) ab und entfernt dadurch Rückstände von der Oberfläche der Grillplatte (6).
